# EUROPÄISCHE PATENTSCHRIFT

(11) **EP 1 196 044 B1**
(45) Veröffentlichungstag und Bekanntmachung des Hinweises auf die Patenterteilung: **24.09.2003**
(21) Anmeldenummer: 00954506.2
(22) Anmeldetag: 14.07.2000
(51) Int. Cl.: A23G 3/20, A23G 3/02, A23G 1/20, A23G 1/04

(54) **VORRICHTUNG ZUM HERSTELLEN EINES VERZEHRGUTES**
DEVICE FOR PRODUCING CONSUMABLES
DISPOSITIF POUR REALISER UN PRODUIT DE CONSOMMATION

(30) Priorität: 21.07.1999 DE 19934106
(43) Veröffentlichungstag der Anmeldung: 17.04.2002
(73) Patentinhaber: KMB Produktions AG, 8552 Felben (CH)
(72) Erfinder: KNOBEL, Josef, CH-5586 Wigoltingen (CH)
(74) Vertreter: Weiss, Peter, Dr.
(86) Internationale Anmeldenummer: EP0006743
(87) Internationale Veröffentlichungsnummer: WO01006864

(56) Entgegenhaltungen:
- DE-U- 29 706 282
- FR-A- 319 862
- FR-A- 1 165 925
- US-A- 2 195 441
- US-A- 2 765 962
- US-A- 2 771 225
- US-A- 2 857 082

## Beschreibung

Die Erfindung betrifft eine Vorrichtung zum Herstellen eines Verzehrgutes, insbesondere einer Praline aus einer von einem Mantel umhüllten Füllung, wobei für ein dosiertes Zuführen von Substanzen des Verzehrgutes zu Düsen Pumpen mit Pumpenstösseln in einem Pumpenraum vorgesehen sind.

Pralinen bestehen beispielsweise aus einem Schokoladenmantel und einer beliebigen Füllung und werden heute im industriellen Bereich automatisch in der sogenannten One - Shot - Technologie hergestellt. In diesem Verfahren wird in eine Form durch eine einzige Düse beispielsweise durch einen Ringkanal die Schokolade eingebracht und gleichzeitig durch eine Axialbohrung eine Füllung, wobei die Füllung den Schokoladenmantel gegen die Formwand drückt. So wird durch einen einzigen "Schuss" eine geschlossene Praline aus Mantel mit Füllung hergestellt.

Die entsprechenden Substanzen für den Mantel und die Füllung werden mittels Pumpen zu den Düsen gebracht, wobei jeweils einer Düse an einem Düsenbalken eine Pumpe zugeordnet ist. Diese Reihen von Pumpen sind wiederum mit einem einzigen Hubbalken verbunden, so dass die Hubbewegung der Pumpenstössel durch die Bewegung des Hubbalkens erfolgt. Im Hubbalken sitzen auch Drehelemente, welche den Pumpenstössel jeweils um 180° drehen können.

Eine Vorrichtung der oben genanten Art ist beispielsweise aus der DE 297 06 282 U1 bekannt. Bei der dort gezeigten Anordnung einer Vielzahl von Pumpen nebeneinander hat sich herausgestellt, dass sehr viel Platz für die Pumpen in Anspruch genommen wird, so dass dadurch auch der Träger für die Pumpen ein erhebliches Gewicht aufweist. Ferner sind derartige Vorrichtungen aus der US-A-2 195 441 und der US-A-2 771 225 bekannt.

Der vorliegenden Erfindung liegt die Aufgabe zugrunde, unter Beibehaltung des erforderlichen Innendurchmessers des Pumpenraumes die Baugrösse der Pumpenanordnung wesentlich zu vermindern und damit Gewicht und Raum einzusparen.

Zur Lösung dieser Aufgabe führt, dass zumindest zwei Pumpenräume so übereinander angeordnet und versetzt zueinander angeordnet sind, dass ein Abstand der vertikalen Ebenen durch die beiden Mittelachsen der Pumpräume geringer ist, als die Summe der beiden Radien der Pumpenräume.

Dieses Übereinanderanordnen der Pumpenräume gestattet es, dass sich die Pumpenräume in der Vertikalebene überlappen, so dass eine Breite des gesamten Pumpengehäuses verringert werden kann, und deshalb die gesamte Baugrösse der nebeneinander angeordneten Pumpen wesentlich verringert wird.

Im Rahmen der Erfindung liegt, dass in einem Pumpengehäuse auch mehrere Pumpenräume höhenversetzt zueinander angeordnet sind. In der Praxis hat sich aber ein Zweierblock als günstig herausgestellt, da so eine grössere Flexibilität beim Einsatz der Pumpen gegeben ist. Beispielsweise können Zweierblöcke ausser Tätigkeit gesetzt werden, ohne dass andere benachbarte Zweierblöcke in ihrer Funktion beeinträchtigt werden.

Die geringste Baubreite würde dann erreicht, wenn die Pumpenräume direkt senkrecht übereinander liegen. Allerdings ist dann die Führung der Substanz von einem Zuführtrichter zu den Düsen über zumindest einen gekrümmten Kanal notwendig, was möglicherweise auf Schwierigkeiten stossen könnte.

Deshalb ist im Rahmen der Erfindung vorgesehen, dass die Pumpenräume nicht nur höhenversetzt, sondern auch in der Waagerechten zueinander versetzt angeordnet sind. Allerdings sollte dabei, damit die Baugrösse so gering wie möglich gehalten werden kann, ein Abstand der vertikalen Ebenen durch die beiden Mittelachsen der Pumpenräume geringer sein, als die Summe der beiden Radien der Pumpenräume. Die Anordnung sollte so gewählt werden, dass beide Auslassöffnungen nebeneinander vertikal nach unten führen. Vom Erfindungsgedanken soll aber jede Anordnung umfasst sein.

Ferner ist bevorzugt vorgesehen, dass die benachbarten Pumpenstössel in einem Pumpengehäuse gemeinsam von einem Antriebselement in Drehbewegung versetzt werden können. Sofern es sich um zwei Pumpenstössel handelt, besitzt dabei jeder Pumpenstössel beispielsweise ein Zahnrad, wobei die beiden Zahnräder ineinandergreifen. Es genügt dann, wenn ein Zahnrad von einer Zahnstange angegriffen wird.

Insgesamt ist vorgesehen, dass an einem Träger, an dem auch die Düsen bzw. ein entsprechender Düsenbalken festliegt, sich gegenüberliegende Pumpengehäuse angeordnet sind. Aus Gründen der Kraftverteilung hat es sich als ratsam erwiesen, wenn die sich gegebenüberliegenden Pumpenräume ebenfalls höhenversetzt angeordnet sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Schnitt durch einen Teil einer erfindungsgemäsen Vorrichtung zum Herstellen eines Verzehrgutes;
Figur 2 einen Querschnitt durch ein erfindungsgemässes Pumpengehäuse;
Figur 3 einen Längsschnitt durch das Pumpengehäuse gemäss Figur 2 entlang Linie III - III;
Figur 4 einen Längsschnitt durch das Pumpengehäuse gemäss Figur 2 entlang Linie IV - IV;
Figur 5 linksseitig eine vergrössert dargestellte Vorderansicht eines Teiles eines Hubbalkens und rechtsseitig eine vergrössert dargestellte, geschnittene Rückansicht des Hubbalkens.

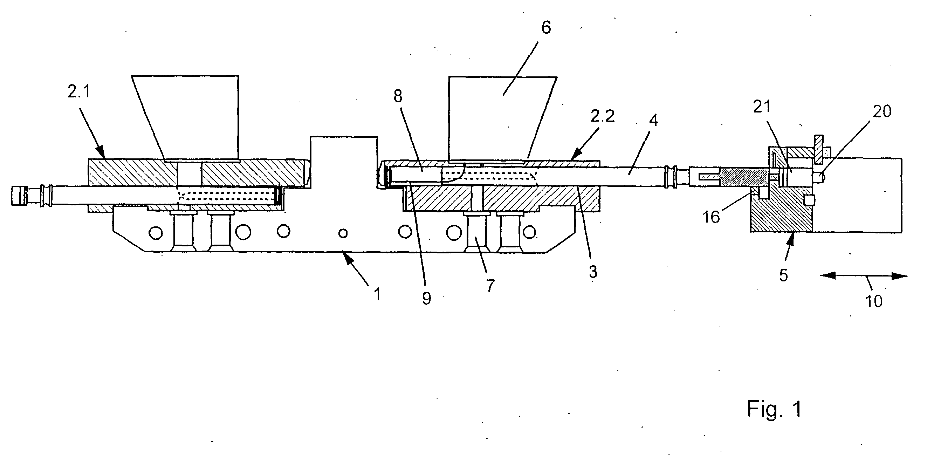

Von einer erfindungsgemässen Vorrichtung zum Herstellen eines Verzehrgutes ist gemäss Figur 1 ein Träger 1 dargestellt, der links und rechts eine Mehrzahl von Pumpengehäusen 2.1 und 2.2 aufweist. In jedem Pumpengehäuse 2.1,2.2 befindet sich ein Pumpenraum 3, in dem ein Pumpenstössel 4 gleitet. Der Pumpenstössel 4 ist mit einem Hubbalken 5 verbunden.

Diese Anordnung dient dazu, beispielsweise eine Füllung oder eine Substanz für einen Mantel einer Praline aus einem Zuführtrichter 6 zu einer nicht näher gezeigten Düse durch entsprechende Kanäle 7 in den Träger 1 zu bringen. Hierzu gelangt die Substanz von dem Zuführtrichter 6 in einen Dosierraum 8, der Teil des Pumpenraumes 3 ist und dadurch gebildet wird, dass ein Teil des Pumpenstössels 4 achsparallel weggeschnitten und dieser Bereich eingestochen ist. Hierdurch entsteht in dem Pumpenstössel 4 eine begrenzte Mulde 9, zwischen der und einer Innenwand des Pumpenraumes 3 eine bestimmte Substanzmenge aufgenommen werden kann.

Eine weitere bestimmte Menge an Substanz gelangt vor eine nicht näher gezeigte Stirnfläche des Pumpenstössels 4 und einen Boden des Pumpenraumes 3, in dem der Pumpenstössel 4 gleitet und gedreht werden kann.

Sobald der Dosierraum 8 und der Raum zwischen dem Boden des Pumpenraumes 3 und der Stirnfläche des Pumpenstössels 4 mit Substanz gefüllt ist, wird der Pumpenstössel 4 um 180° gedreht, so dass die Mulde 9 dem Kanal 7 zugeordnet ist. Wird jetzt der Pumpenstössel 4 tiefer in den Pumpenraum 3 hineingestossen, so wird der Raum zwischen der Stirnfläche des Pumpenstössels 4 und dem Boden des Pumpenraumes 3 verkleinert, so dass die Substanz aus diesem Raum in den Kanal 7 gelangt. Da der Kanal 7 über nicht näher gezeigte Kanäle mit einer Düse in Verbindung steht, wird jeweils eine entsprechend dosierte Menge an Substanz beispielsweise in eine Form eingefüllt.

Der erforderliche Hub des Pumpenstössels 4 wird durch den Hubbalken 5 bewirkt, welcher sich in Richtung des Doppelpfeiles 10 bewegen kann. Die hierfür erforderlichen hydraulischen oder pneumatischen Einrichtungen sind nicht näher gezeigt.

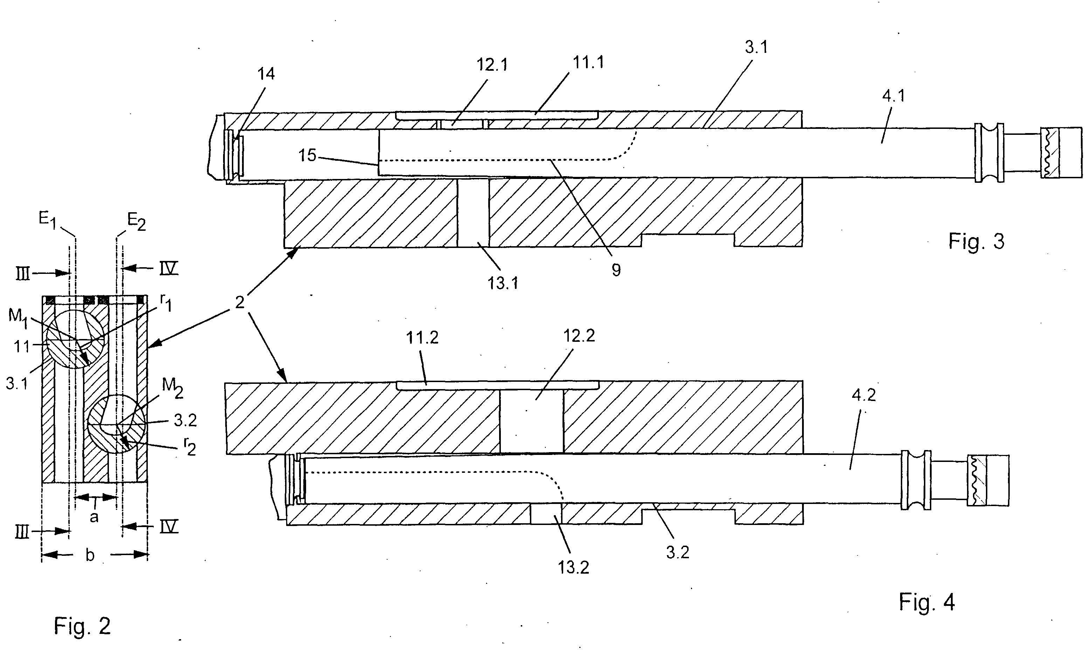

Erfindungsgemäss sitzen auf dem Träger 1 mehrere Pumpengehäuse 2 nebeneinander auf, wobei ein Pumpengehäuse 2 in Figur 2 im Querschnitt dargestellt ist. Bevorzugt befinden sich in jedem Pumpengehäuse 2 zwei Pumpenräume 3.1 und 3.2, wobei die Pumpenräume 3.1 und 3.2 vertikal übereinanderliegen. Jeder Pumpenraum 3.1 und 3.2 besitzt wiederum eine Mittelachse M₁ und M₂, die in einer vertikalen Ebene E₁ bzw. E₂ angeordnet sind, die einen Abstand a voneinander einhalten. Dieser Abstand a ist geringer als die Summe der beiden Radien r₁ und r₂ der Pumpenräume 3.1 und 3.2. Hierdurch ist es möglich, eine Breite b des Pumpengehäuses 2 so gering wie möglich zu halten.

In Figur 3 ist ein oberer Pumpenstössel 4.1, in Figur 4 ein unterer Pumpenstössel 4.2 erkennbar. In die jeweiligen Pumpenräume 3.1 bzw. 3.2 münden von oben her nachfolgend an jeweils eine Ausnehmung 11.1 und 11.2 zum Aufsetzen eines Zuführtrichters 6 Einfüllöffnungen 12.1 und 12.2, denen andererseits wiederum Auslassöffnungen 13.1 und 13.2 zugeordnet sind.

In Figur 3 befindet sich der Pumpenstössel 4.1 in seiner Aufnahmestellung, in der Substanz in die Mulde 9 und in den Zwischenraum zwischen den Boden 14 des Pumpenraumes 3.1 und die Stirnfläche 15 des Pumpenstössels 4.1 durch die Einfüllöffnung 12.1 eingefüllt werden kann.

Zum Ausstossen der Substanz wird der Pumpenstössel 4.2, wie in Figur 4 gezeigt, um 180° gedreht und nach vorne Richtung Boden 14 hin gestossen, so dass die Substanz durch die Auslassöffnung 13.2 ausquellen kann.

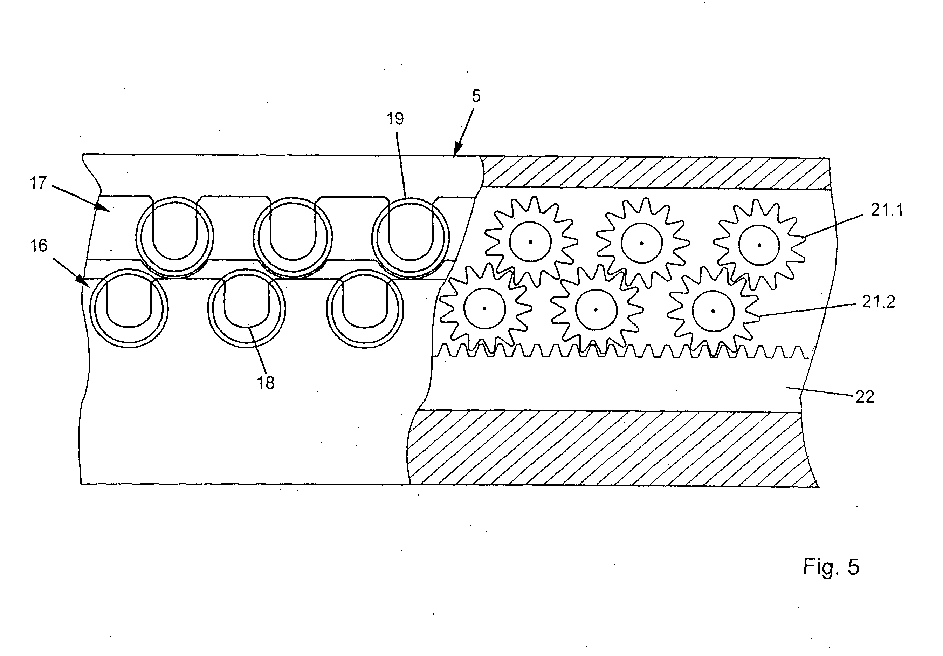

Zur Aufnahme und Halterung der Pumpenstössel 4 an dem Hubbalken 5 sind gemäss Figur 5 und Figur 1 zwei höhenversetzt angeordnete Randstreifen 16 und 17 vorgesehen, in die jeweils Lagermulden 18 eingeformt sind. Diese Lagermulden dienen der Aufnahme und Halterung der jeweiligen Pumpenstössel 4, wobei diese durch eine Öffnung 19 im Hubbalken 5 hindurchstossen und nach hinten herausragen. Auf ein entsprechendes Endstück 20 jedes Pumpenstössels 4 ist ein Zahnrad 21 aufgesetzt, wobei, wie in Figur 5 erkennbar, die Zahnräder 21,1 und 21.2 von den Pumpenstösseln 4.1 und 4.2 jeweils einer Pumpenanordnung ineinandergreifen. Ferner kämmt eine Zahnstange 22 jeweils ein Zahnrad 21.2, so dass durch diese Anordnung gewährleistet wird, dass die Zahnräder 21.1 und 21.2 gemeinsam um jeweils 180°, jedoch in eine unterschiedliche Drehrichtung gedreht werden.

## Patentansprüche

1. Vorrichtung zum Herstellen eines Verzehrgutes, insbesondere einer Praline aus einer von einem Mantel umhüllten Füllung, wobei für ein dosiertes Zuführen von Substanzen des Verzehrgutes zu Düsen Pumpen mit Pumpenstösseln (4) in einem Pumpenraum (3) vorgesehen sind,
**dadurch gekennzeichnet,**
**dass** zumindest zwei Pumpenräume (3.1, 3.2) so übereinander angeordnet und versetzt zueinander angeordnet sind, dass ein Abstand (a) der vertikalen Ebenen (E₁, E₂) durch die beiden Mittelachsen (M₁, M₂) der Pumpräume (3.1, 3.2) geringer ist, als die Summe der beiden Radien (r₁, r₂) der Pumpenräume (3.1, 3.2).

2. Vorrichtung nach Anspruch 1, **dadurch gekennzeichnet, dass** die Pumpenstössel (4.1, 4.2) von zumindest zwei benachbarten Pumpenräumen (3.1, 3.2) gemeinsam mit einem Antriebselement (22) verbunden sind.

3. Vorrichtung nach Anspruch 2, **dadurch gekennzeichnet, dass** jeder Pumpenstössel (4.1, 4.2) ein Zahnrad (21.1, 21.2) aufweist, wobei zumindest zwei benachbarte Zahnräder (21.1, 21.2) ineinandergreifen und ein Zahnrad (21.2) davon in die Zahnung einer Zahnstange (22) eingreift.

4. Vorrichtung nach einem der Ansprüche 1 bis 3, **dadurch gekennzeichnet, dass** an einem Träger (1), der auch mit den Düsen verbunden ist, sich gegenüberliegend Pumpengehäuse (2.1, 2.2) mit dem Pumpenräumen (3.1, 3.2) angeordnet sind.

5. Vorrichtung nach Anspruch 4, **dadurch gekennzeichnet, dass** die sich gegenüberliegenden Pumpenräume (3.1, 3.2) höhenversetzt angeordnet sind.

## Claims

1. Apparatus for producing a consumable item, more especially a praline, formed from a filling enclosed by a coating, pumps having pump plungers (4) being provided in a pump chamber (3) for supplying substances for the consumable item to nozzles in a dosed manner, **characterised in that** at least two pump chambers (3.1, 3.2) are disposed above one another and offset relative to one another so that a spacing (a) between the vertical planes (E₁, E₂) through the two central axes (M₁, M₂) of the pump chambers (3.1, 3.2) is smaller than the sum of the two radii (r₁, r₂) of the pump chamber (3.1, 3.2).

2. Apparatus according to claim 1, **characterised in that** the pump plungers (4.1, 4.2) of at least two adjacent pump chambers (3.1, 3.2) are jointly connected to a drive element (22).

3. Apparatus according to claim 2, **characterised in that** each pump plunger (4.1, 4.2) has a toothed wheel (21.1, 21.2), at least two adjacent toothed wheels (21.1, 21.2) intermeshing, and one toothed wheel (21.2) thereof engaging in the toothing of a toothed rod (22).

4. Apparatus according to one of claims 1 to 3, **characterised in that** pump housings (2.1, 2.2), having the pump chambers (3.1, 3.2), are disposed opposite one another on a support (1), which is also connected to the nozzles.

5. Apparatus according to claim 4, **characterised in that** the oppositely situated pump chambers (3.1, 3.2) are disposed in a vertically offset manner.

## Revendications

1. Dispositif pour réaliser un produit de consommation, en particulier une praline, à partir d'un remplissage entouré d'une enveloppe, pour une alimentation dosée de substances du produit de de consommation vers des tuyères étant prévues, dans une chambre de pompage (3), des pompes à poussoirs (4),
**caractérisé par le fait**
**qu'**au moins deux chambres de pompage (3.1, 3.2) sont disposées l'une au-dessus de l'autre et décalées l'une par rapport à l'autre de telle sorte qu'une distance (a) des plans verticaux (E₁,E₂) passant par les deux axes médians (M₁, M₂) des chambres de pompage (3.1, 3.2) est plus courte que la somme des deux rayons (r₁, r₂) des chambres de pompage (3.1, 3.2).

2. Dispositif selon la revendication 1, **caractérisé par le fait que** les poussoirs (4.1, 4.2) d'au moins deux chambres de pompage (3.1, 3.2) adjacentes sont reliés en commun à un élément d'entraînement (22).

3. Dispositif selon la revendication 2, **caractérisé par le fait que** chaque poussoir (4.1, 4.2) présente une roue dentée (21.1, 21.2), au moins deux roues dentées (21.1, 21.2) adjacentes engrenant l'une dans l'autre et une roue dentée (21.2) parmi celles-ci engrenant dans la denture d'une crémaillère (22).

4. Dispositif selon l'une des revendications 1 à 3, **caractérisé par le fait que** sur un support (1), qui est également relié aux tuyères, sont disposés, opposés l'un à l'autre, des corps de pompe (2.1, 2.2) avec les chambres de pompage (3.1, 3.2).

5. Dispositif selon la revendication 4, **caractérisé par le fait que** les chambres de pompage (3.1, 3.2) opposées l'une à l'autre sont disposées décalées en hauteur.
